# EUROPEAN PATENT APPLICATION

(11) **EP 4 715 950 A1**
(43) Date of publication of application: **25.03.2026**
(21) Application number: 25197177.6
(22) Date of filing: 20.08.2025
(51) Int. Cl.: H01M 10/42, H01M 50/528, H01M 50/569, H01M 10/48, H01M 50/572

(54) **BATTERY ASSEMBLY AND BATTERY DRIVING DEVICE**

(30) Priority: 19.09.2024 KR 20240126840
(71) Applicant: SAMSUNG SDI CO., LTD., Yongin-si, Gyeonggi-do 17084 (KR)
(72) Inventor: KOH, Seok, 17084 Yongin-Si (KR)
(74) Representative: Regimbeau

(57) **Abstract**

A battery assembly includes a battery cell accommodating an electrode assembly and including a first side that includes a first electrode terminal and a second electrode terminal thereon, a protective circuit module above the first electrode terminal and the second electrode terminal, and a connecting portion connecting the first electrode terminal and the second electrode terminal to the protective circuit module, wherein the connecting portion has a foldable structure.

## Description

### FIELD

Embodiments of the present disclosure relate to a battery assembly and a battery driving device.

### TECHNICAL BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Typically, secondary batteries are provided with a protective circuit module (PCM) to protect the battery from overcharge, over-discharge, or over-current. Accordingly, secondary batteries are used in the form of battery assemblies in which a protection circuit module is coupled to a battery cell.

The protective circuit module is electrically connected to the battery cell and an external load and may selectively block or reduce the electrical connection between the battery cell and the load depending on the characteristics of the discharge current flowing to the load or the charge current flowing to the battery cell.

Typically, a protective circuit module includes (e.g., consists of) chips that function as switching elements or are to protect battery cells, and a number of passive elements to drive these chips.

Recently, as battery sizes have begun to decrease, the size of the protective circuit module is also desired or required to be reduced, but with the increasing precision of operation and the addition of new functions, the protective circuit module tends to include more chips, leading to an increase in size. Accordingly, various efforts are being made to include high-function protective circuit modules in battery cells that are becoming smaller in size.

The above information disclosed in this Background section is for enhancement of understanding of the background of the present disclosure, and therefore, it may contain information that does not constitute related (or prior) art.

### SUMMARY

Aspects of one or more embodiments of the present disclosure are directed toward providing a battery assembly and a battery driving device to address the aforementioned issues.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to the invention, there is provided a battery assembly and a battery driving device as defined in the claims.

According to one or more embodiments of the present disclosure to address the above issues, a battery assembly includes a battery cell configured to accommodate (e.g., accommodating) an electrode assembly and including a first side including a first electrode terminal and a second electrode terminal thereon, a protective circuit module arranged above the first electrode terminal and the second electrode terminal, and a connecting portion configured to connect (e.g., connecting) the first electrode terminal and the second electrode terminal to the protective circuit module, wherein the connecting portion has a foldable structure.

According to one or more embodiments, the protective circuit module may be arranged parallel to the first side in a structure in which the connecting portion may be folded.

According to one or more embodiments, the protective circuit module may be arranged to be spaced and/or apart (e.g., spaced apart or separated) from the first electrode terminal in the structure in which the connecting portion may be folded.

According to one or more embodiments, the connecting portion may include a first connecting portion arranged on the first side, connecting the first electrode terminal to the protective circuit module, and having a foldable structure, and a second connecting portion arranged on the first side, connecting the second electrode terminal to the protective circuit module, and having a foldable structure.

According to one or more embodiments, the first connecting portion may include a first terminal tab connected to the first electrode terminal, a support tab having a step with respect to the first terminal tab and extending horizontally from one side of the first terminal tab, and a first module tab bent and extending from one side of the support tab and connected to the protective circuit module.

According to one or more embodiments, in a structure in which the first connecting portion may be folded, the support tab and the first module tab may be in direct contact with each other.

According to one or more embodiments, the step may correspond to a height of the first electrode terminal protruding from the first side.

According to one or more embodiments, the second connecting portion may include a second terminal tab connected to the second electrode terminal, and a second module tab connected to the protective circuit module.

According to one or more embodiments, in a structure in which the second connecting portion may be folded, the second terminal tab and the second module tab may be in direct contact with each other.

According to one or more embodiments, the protective circuit module may include a first substrate module having a lower surface connected to the first electrode terminal and the second electrode terminal and an upper surface facing (e.g., opposite to) the lower surface, and a second substrate module connected to the upper surface of the first substrate module, and a length of the second substrate module may be longer than that of the first substrate module.

According to one or more embodiments, the first substrate module may be horizontal spaced and/or apart (e.g., spaced apart or separated) from the first electrode terminal.

According to one or more embodiments, the second substrate module may be vertically spaced and/or apart (e.g., spaced apart or separated) from the first electrode terminal.

According to one or more embodiments, the first substrate module may include a first substrate including a protective circuit element (e.g., on which a protective circuit element may be integrated), a lead portion drawn from one side of the first substrate, and a connector arranged on one side of the lead portion and connected to an external device.

According to one or more embodiments, the first substrate may include a flexible printed circuit board.

According to one or more embodiments, the second substrate module may include a second substrate including a protective circuit element (e.g., on which a protective circuit element may be integrated), and a second substrate cap arranged on the second substrate while covering the protective circuit element.

According to one or more embodiments, the second substrate may include a printed circuit board.

According to one or more embodiments, the battery assembly may further include an insulating portion arranged on the first side between the first electrode terminal and the second electrode terminal.

According to one or more embodiments, the insulating portion may include a first insulating member arranged on the first side, and between a first connecting portion connected to the first electrode terminal and the battery cell, and a second insulating member arranged on the first insulating member and between the battery cell and the protective circuit module.

According to one or more embodiments, the battery cell may include a case accommodating the electrode assembly and may be made of a metal including stainless steel (SUS).

According to one or more embodiments of the present disclosure, a battery driving device includes an operating unit configured to operate in a case of being supplied with power, a housing configured to accommodate the operating unit therein so that the operating unit may be fixed, and a power unit fixed inside the housing and configured to supply power to the operating unit. The power unit includes a battery cell accommodating an electrode assembly and including a first side including a first electrode terminal and a second electrode terminal thereon, a protective circuit module arranged above the first electrode terminal and the second electrode terminal, and a connecting portion connecting the first electrode terminal and the second electrode terminal to the protective circuit module, and the connecting portion has a foldable structure.

According to one or more embodiments of the present disclosure, the area in which the protective circuit module may be arranged is increased, allowing the size of the protective circuit module to be increased while maintaining the same size of the battery assembly.

According to one or more embodiments of the present disclosure, by arranging more protective circuit elements in the protective circuit module, a high-precision and high-performance protective circuit module may be provided.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of a battery assembly, according to one or more embodiments of the present disclosure.
FIG. 2 is an exploded perspective view of a battery assembly, according to one or more embodiments of the present disclosure.
FIG. 3 is a perspective view of a battery assembly before a connection portion is folded, according to one or more embodiments of the present disclosure.
FIG. 4 is a plan view illustrating a front surface of a battery assembly, according to one or more embodiments of the present disclosure.
FIG. 5 is an enlarged view of area A of FIG. 4, according to one or more embodiments of the present disclosure.
FIG. 6 is an exploded view of a battery cell, according to one or more embodiments of the present disclosure.
FIG. 7 is a perspective view of a first connecting portion, according to one or more embodiments of the present disclosure.
FIG. 8 is a perspective view of a second connecting portion, according to one or more embodiments of the present disclosure.
FIG. 9 is a perspective view of a protective circuit module, according to one or more embodiments of the present disclosure.
FIG. 10 is a side view of one side of a protective circuit module, according to one or more embodiments of the present disclosure.
FIG. 11 is a perspective view of a battery driving device, according to one or more embodiments of the present disclosure.
FIG. 12 is a plan view of a battery assembly arranged in a battery driving device, according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

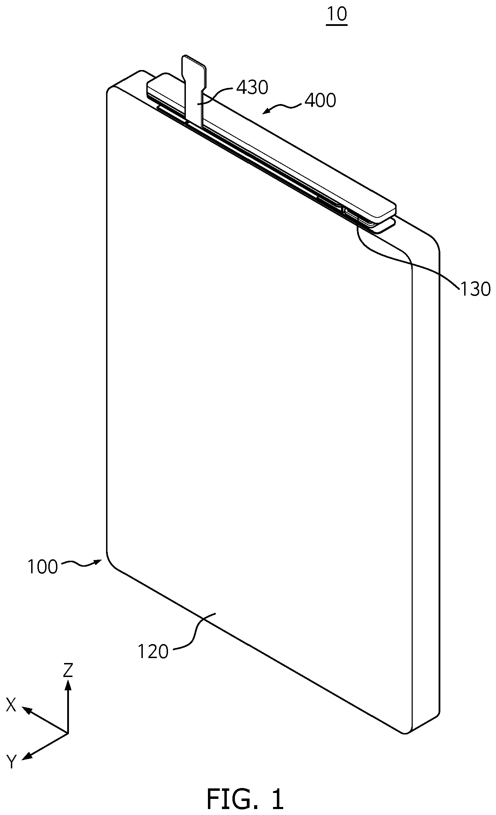

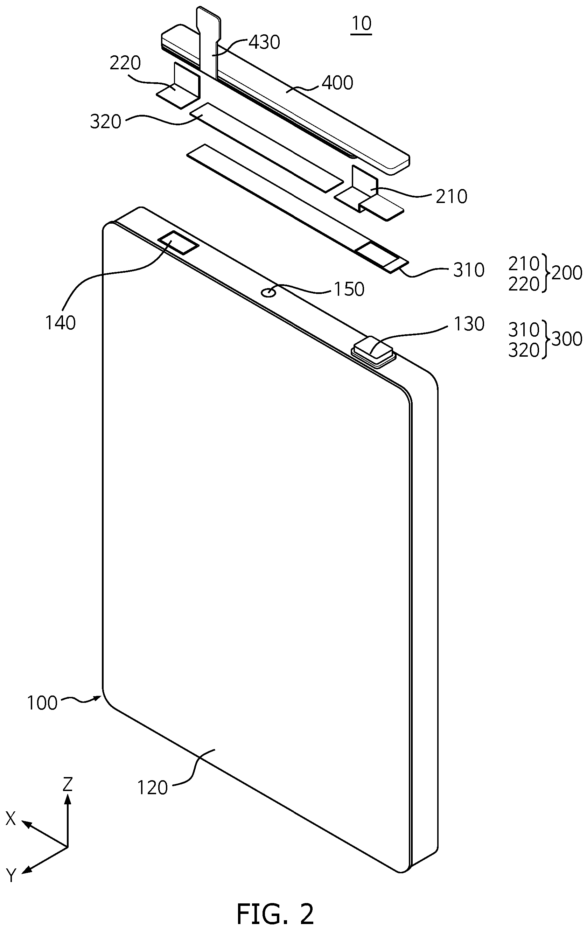

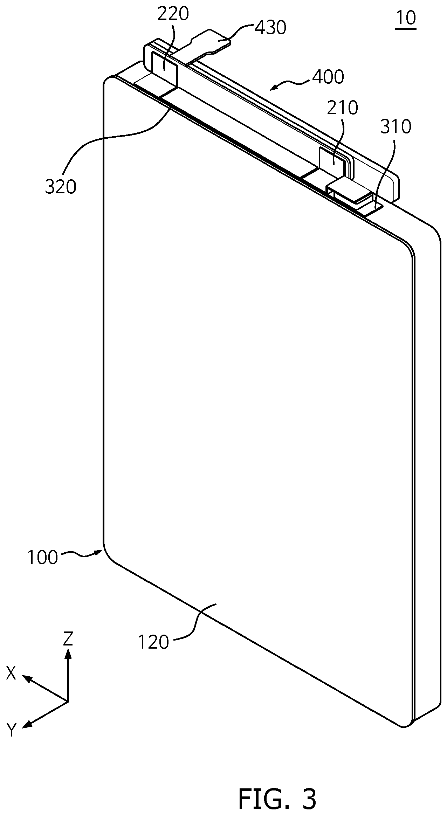

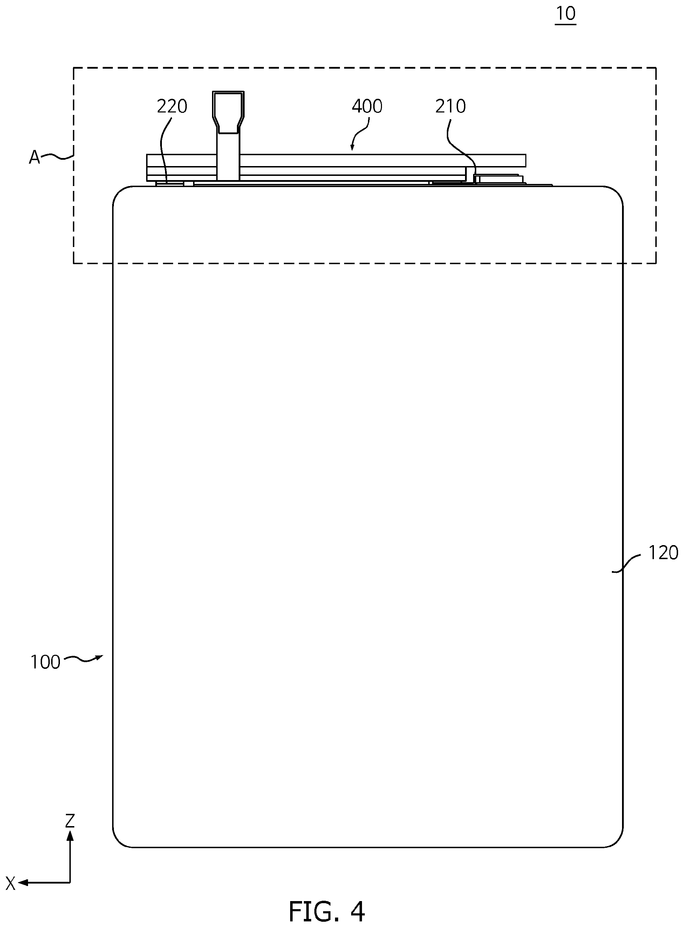

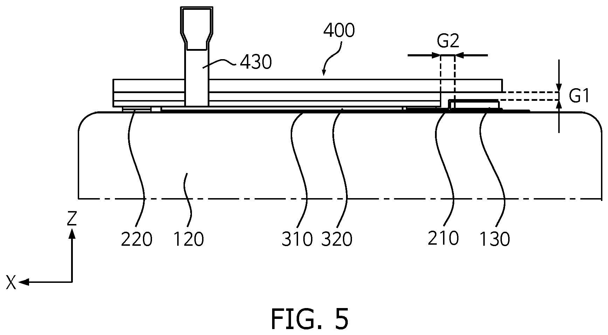

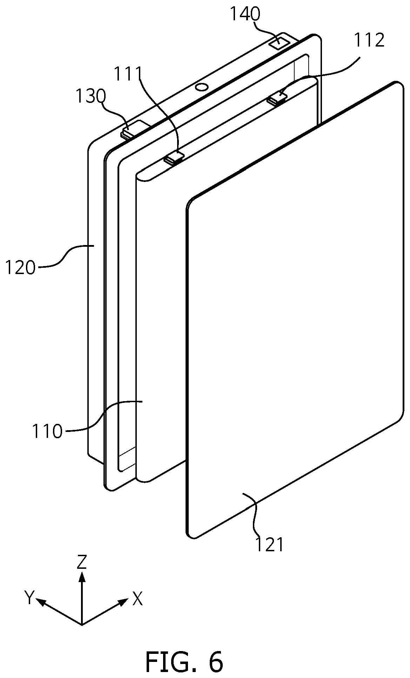

FIG. 1 is a perspective view of a battery assembly, according to one or more embodiments of the present disclosure. FIG. 2 is an exploded perspective view of a battery assembly, according to one or more embodiments of the present disclosure. FIG. 3 is a perspective view of a battery assembly before a connection portion is folded, according to one or more embodiments of the present disclosure. FIG. 4 is a plan view illustrating a front surface of a battery assembly, according to one or more embodiments of the present disclosure. FIG. 5 is an enlarged view of area A of FIG. 4, according to one or more embodiments of the present disclosure. FIG. 6 is an exploded view of a battery cell, according to one or more embodiments of the present disclosure.

Referring to FIG. 1 to FIG. 6, a battery assembly 10 according to one or more embodiments of the present disclosure may include a battery cell 100, a connecting portion 200, an insulating portion 300, and a protective circuit module 400.

According to one or more embodiments, as shown, for example, in FIG. 6, the battery cell 100 may include an electrode assembly 110, a case 120 in which the electrode assembly 110 is accommodated, and a first electrode terminal 130 and a second electrode terminal 140 provided on a first side of the case 120. The first side of the case 120 of the present disclosure may be used in substantially the same sense as the first side of the battery cell 100. The first side may correspond to the surface opposite to the Z-axis.

According to one or more embodiments, the electrode assembly 110 may include a first electrode, a second electrode, and a separator. Herein, the first electrode may be a positive electrode, and the second electrode may be a negative electrode. For example, the electrode assembly 110 may be a wound-type (kind) electrode assembly 110 formed by winding after a separator, which is an insulator, is interposed between a first electrode and a second electrode. Alternatively, in one or more embodiments, the electrode assembly 110 may be a stacked-type (kind) electrode assembly 110 in which the first electrode and the second electrode are alternately stacked with a separator therebetween, or it may have any structure that includes the first electrode and the second electrode. The structure of the electrode assembly 110 described above is only an example, and the present disclosure is not limited thereto.

According to one or more embodiments, the electrode assembly 110 may further include a first electrode tab 111 and a second electrode tab 112.

The first electrode tab 111 may be separately formed to be connected to the uncoated portion of the first electrode, or may be formed by punching a portion of the uncoated portion. The first electrode tab 111 may extend from the uncoated portion to be connected to the first electrode terminal 130. The first electrode tab 111 may serve as a current flow path between the first electrode and the first electrode terminal 130.

The second electrode tab 112 may be separately formed to be connected to the uncoated portion of the second electrode, or may be formed by punching a portion of the uncoated portion. The second electrode tab 112 may extend from the uncoated portion to be electrically connected to the case 120. The second electrode tab 112 may serve as a current flow path between the second electrode and the case 120. The second electrode tab 112 may be electrically connected to the second electrode terminal 140. The second electrode tab 112 may serve as a current flow path between the second electrode and the second electrode terminal 140.

According to one or more embodiments, the case 120 may form the overall appearance of the battery cell 100. The case 120 may be made of stainless steel (SUS). In one or more embodiments, the entire case 120 may be made of a conductive metal such as aluminum, an aluminum alloy, or nickel-plated steel.

In one or more embodiments, the case 120 has one open side to accommodate the electrode assembly 110. After the electrode assembly 110 is accommodated in the case 120, the electrode assembly 110 may be sealed from the outside while covering one open surface through the cover 121 of the case 120. Both the accommodating portion of the case 120 accommodating the electrode assembly 110 and the cover 121 covering the open surface of the accommodating portion may be made of conductive metal. For example, the accommodating portion of the case 120 and the cover 121 covering the open surface of the accommodating portion may include stainless steel (SUS).

According to one or more embodiments, a first electrode terminal 130, a second electrode terminal 140, and an electrolyte injection port 150 (see, e.g., FIG. 2) may be provided on the first side of the case 120. The electrolyte injection port 150 may be formed between the first electrode terminal 130 and the second electrode terminal 140, but the present disclosure is not limited thereto. After the electrolyte is injected, the electrolyte injection port 150 may be sealed by a sealing member.

According to one or more embodiments, the first electrode terminal 130 may be arranged on the first side of the case 120. The first electrode terminal 130 may be formed through the first side of the case 120. An insulating gasket may be interposed between the first electrode terminal 130 and the case 120, and the first electrode terminal 130 may be insulated from the case 120 through the insulating gasket. The first electrode terminal 130 may be electrically connected to the first electrode of the electrode assembly 110. The first electrode terminal 130 may be electrically connected to the first electrode through the first electrode tab 111 (see, e.g., FIG. 6). The first electrode terminal 130 may be electrically connected to the first electrode to function as a positive electrode.

According to one or more embodiments, the first electrode terminal 130 may be electrically connected to the protective circuit module 400 (see, e.g., FIG. 2). The first electrode terminal 130 may be electrically connected to the protective circuit module 400 through the first connecting portion 210. The first electrode terminal 130 may be welded to the first connecting portion 210, but the present disclosure is not limited thereto.

According to one or more embodiments, the second electrode terminal 140 may be spaced and/or apart (e.g., spaced apart or separated) from the first electrode terminal 130 in the X-axis direction and may be arranged on the first side of the case 120. The second electrode terminal 140 may be electrically connected to the case 120. Unlike the first electrode terminal 130, the second electrode terminal 140 may be formed in contact with the case 120. The second electrode terminal 140 may be electrically connected to the second electrode of the electrode assembly 110 (see, e.g., FIG. 6). The case 120 may be electrically connected to the second electrode through the second electrode tab 112. The second electrode terminal 140 may be electrically connected to the second electrode through the case 120 and the second electrode tab 112. The case 120 and the second electrode terminal 140 may be electrically connected to the second electrode and function as a negative electrode.

The second electrode terminal 140 having the same polarity as the case 120 may be arranged in contact with the case 120. Because the case 120 is made of stainless steel and may be subject to welding damage during the process of being welded and connected to external terminals, the second electrode terminal 140 having rigidity in welding may be attached to the case 120 to be welded and connected to the external terminals. For example, in a case where the connecting portion 200 is directly welded to the case 120 rather than the second electrode terminal 140, leakage may occur in the case 120 or even the accommodated electrode assembly 110 may be damaged due to welding depth and/or the like. To prevent or reduce this, the second electrode terminal 140 that has excellent or suitable weldability with the case 120 and the connecting portion 200 and that has rigidity in welding may be arranged in contact with the case 120.

According to one or more embodiments, the second electrode terminal 140 may include a second electrode plate having rigidity in welding and excellent or suitable weldability. The second electrode plate may include a nickel (Ni) alloy, but the present disclosure is not limited thereto. The second electrode plate may be attached to the case 120 through ultrasonic welding, but the present disclosure is not limited thereto.

According to one or more embodiments, the second electrode terminal 140 may be electrically connected to the protective circuit module 400. The second electrode terminal 140 may be electrically connected to the protective circuit module 400 through the second connection portion 220. The second electrode terminal 140 may be welded to the second connecting portion 220, but the present disclosure is not limited thereto.

According to one or more embodiments, the connecting portion 200 may connect the first electrode terminal 130 and the second electrode terminal 140 and the protective circuit module 400, respectively. The connecting portion 200 may connect the first electrode terminal 130 and the protective circuit module 400. The connecting portion 200 may connect the second electrode terminal 140 and the protective circuit module 400.

The connecting portion 200 may include a material having good or suitable electrical conductivity. For example, the connecting portion 200 may be made of an electrically conductive metal such as gold, silver, copper, and/or nickel, but the present disclosure is not limited thereto.

According to one or more embodiments, the connecting portion 200 may have a foldable structure. In the structure in which the connecting portion 200 is folded, the protective circuit module 400 may be arranged parallel to the first side of the battery cell 100. In the structure in which the connecting portion 200 is folded, the protective circuit module 400 may be arranged to be spaced and/or apart (e.g., spaced apart or separated) from the first electrode terminal 130.

According to one or more embodiments, the connecting portion 200 may include a first connecting portion 210 and a second connecting portion 220.

As shown in FIG. 3 and FIG. 4, according to one or more embodiments, the first connecting portion 210 may be arranged on the first side and may connect the first electrode terminal 130 to the protective circuit module 400. The first connecting portion 210 may be connected to an upper surface of the first electrode terminal 130 and a lower surface of the protective circuit module 400. The first connecting portion 210 may have a structure that folds after being connected to the first electrode terminal 130 and the protective circuit module 400.

According to one or more embodiments, the second connecting portion 220 may be arranged on the first side and may connect the second electrode terminal 140 and the protective circuit module 400. The second connecting portion 220 may be connected to an upper surface of the second electrode terminal 140 and a lower surface of the protective circuit module 400. The second connecting portion 220 may have a structure that folds after being connected to the second electrode terminal 140 and the protective circuit module 400.

According to one or more embodiments, while the first connecting portion 210 and the second connecting portion 220 are folded, the protective circuit module 400 may be arranged on the first electrode terminal 130 and the second electrode terminal 140.

According to one or more embodiments, the insulating portion 300 may be arranged on the first side of the battery cell 100 between the first electrode terminal 130 and the second electrode terminal 140. A portion of the insulating portion 300 may be arranged on the first side of the battery cell 100, outside the first electrode terminal 130.

According to one or more embodiments, the insulating portion 300 may include a first insulating member 310 and a second insulating member 320. The first insulating member 310 may be arranged on the first side of the battery cell 100 and may be interposed between the first connecting portion 210 and the battery cell 100. The first insulating member 310 may be interposed between the first side of the case 120 (the first side of the battery cell 100) and the first connecting portion 210 to electrically insulate the first connecting portion 210 from the case 120. The first insulating member 310 may be arranged around the first electrode terminal 130. The first insulating member 310 may include a through hole through which the first electrode terminal 130 may be inserted. The first insulating member 310 may be attached to the first side of the battery cell 100 with an insulating tape, but the present disclosure is not limited thereto.

According to one or more embodiments, the second insulating member 320 may be arranged on the first insulating member 310. The second insulating member 320 may be interposed between the battery cell 100 and the protective circuit module 400. The second insulating member 320 may be arranged only between the first connecting portion 210 and the second connecting portion 220 along the X-axis direction.

According to one or more embodiments, the second insulating member 320 may be formed corresponding to the thicknesses of the first connecting portion 210 and the second connecting portion 220. For example, as the first connecting portion 210 and the second connecting portion 220 are folded, the protective circuit module 400 may be spaced and/or apart (e.g., spaced apart or separated) from the first side of the battery cell 100 and arranged on the first side of the battery cell 100. A separation space may be formed between the protective circuit module 400 and the battery cell 100 due to the folded thickness of the first connecting portion 210 and the second connecting portion 220. Due to the separation space between the protective circuit module 400 and the battery cell 100, the bonding strength between the battery cell 100 and the protective circuit module 400 may be weakened by vibration or external impact. To prevent or reduce this, a second insulating member 320 having a thickness corresponding to the separation space may be additionally arranged between the battery cell 100 and the protective circuit module 400. The second insulating member 320 may fill the separation space between the battery cell 100 and the protective circuit module 400.

According to one or more embodiments, the protective circuit module 400 may be electrically connected to the battery cell 100 to prevent or reduce overheating and explosion caused by overcharge, over-discharge, or overcurrent of the battery cell 100. The protective circuit module 400 may include safety elements made of passive elements such as resistors and capacitors or active elements such as field-effect transistors, or protective circuit elements in which integrated circuits may be selectively formed.

As illustrated in FIG. 5, according to one or more embodiments, the protective circuit module 400 may be arranged above the first electrode terminal 130 and the second electrode terminal 140. Depending on design conditions, the length of the protective circuit module 400 illustrated in FIG. 5 may be formed to be shorter in the X-axis direction. Although FIG. 2 shows the protective circuit module 400 overlapping the entire first electrode terminal 130 in the Z-axis direction (e.g., when viewed from the top down), the present disclosure is not limited thereto. For example, only a portion of the first electrode terminal 130 may overlap the protective circuit module 400 in the Z-axis direction, or the first electrode terminal 130 may not overlap the protective circuit module 400 in the Z-axis direction.

The protective circuit module 400 may be arranged parallel to the first side of the battery cell 100 in a structure in which the connecting portion 200 is folded. The protective circuit module 400 may be arranged to be spaced and/or apart (e.g., spaced apart or separated) from the first electrode terminal 130 in a structure in which the connecting portion 200 is folded. The protective circuit module 400 may be spaced and/or apart (e.g., spaced apart or separated) horizontally from the first electrode terminal 130. The protective circuit module 400 may be spaced and/or apart (e.g., spaced apart or separated) vertically from the first electrode terminal 130. For example, the protective circuit module 400 may be arranged with a vertical spacing gap G1 from the first electrode terminal 130. In one or more embodiments, the protective circuit module 400 may be arranged with a horizontal spacing gap G2 from the first electrode terminal 130.

As a comparative example, in a case where the protective circuit module, the first electrode terminal, and the second electrode terminal are connected to a connecting portion other than a foldable structure, the first connecting portion connected to one side of the lower surface of the protective circuit module is welded to the first electrode terminal on the first electrode terminal. The second connecting portion connected to the other side of the lower surface of the protective circuit module is welded to the second electrode terminal on the second electrode terminal. In order to weld-connect the first connecting portion and the first electrode terminal, and the second connecting portion and the second electrode terminal, respectively, a space for the welding process is desired or required on the first electrode terminal and the second electrode terminal. Accordingly, the protective circuit module should be arranged between the first electrode terminal and the second electrode terminal.

To address this issue, in embodiments of the present disclosure, a long-extended protective circuit module 400 (e.g., a protective circuit module 400 that extends along the length of the first side of the battery cell 100 in the X-axis direction) may be connected to a connecting portion 200 of a foldable structure and arranged on the first electrode terminal 130 and the second electrode terminal 140. For example, a protective circuit module 400 formed long enough to correspond to the length of the first side of the battery cell 100 may be arranged. Accordingly, the size of the protective circuit module 400 may be increased while maintaining the same size of the battery assembly 10.

According to one or more embodiments, the protective circuit module 400 may be electrically connected to the battery cell 100 through the connecting portion 200. The protective circuit module 400 may be electrically connected to the first electrode terminal 130 through the first connecting portion 210. The protective circuit module 400 may be electrically connected to the second electrode terminal 140 through the second connecting portion 220. The protective circuit module 400 may measure a voltage of the battery cell 100 and a current flowing in the battery cell 100 through the first electrode terminal 130 and the second electrode terminal 140.

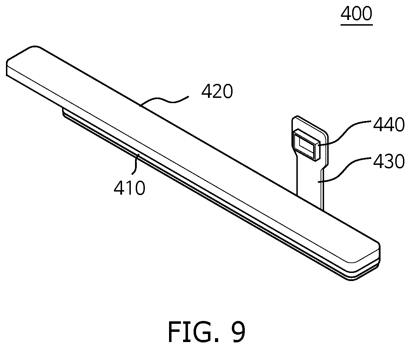

According to one or more embodiments, the protective circuit module 400 may include a flexible printed circuit board. The protective circuit module 400 may include a connector 440 (see, e.g., FIG. 9) connected to an external device on one side of a drawn portion 430 that is drawn from one side thereof. The protective circuit module 400 may be connected to an external device through the connector 440. The protective circuit module 400 may be to transmit electrical energy stored in the battery cell 100 to an external device or to receive a control signal for controlling the operation of the battery cell 100 from the external device.

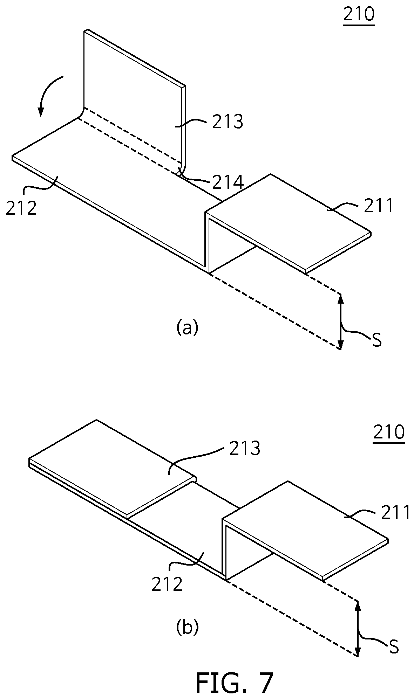

FIG. 7 is a perspective view illustrating a first connecting portion 210, according to one or more embodiments of the present disclosure.

Referring to FIG. 7, FIG. 7(a) illustrates a structure before the first connecting portion 210 is folded, and FIG. 7(b) illustrates a structure after the first connecting portion 210 is folded.

According to one or more embodiments, the first connecting portion 210 may connect the first electrode terminal 130 and the protective circuit module 400 on the first side surface (e.g., the surface of the first side) of the battery cell 100. The first connecting portion 210 may include a material having good or suitable electrical conductivity. For example, the first connecting portion 210 may include a metal having good or suitable electrical conductivity, such as gold, silver, copper, and/or nickel, but the present disclosure is not limited thereto.

According to one or more embodiments, the first connecting portion 210 may include a first terminal tab 211, a support tab 212, and a first module tab 213.

According to one or more embodiments, the first terminal tab 211 may be electrically connected to the first electrode terminal 130 (see, e.g., FIG. 5). The first terminal tab 211 may be connected to the first electrode terminal 130 by welding.

According to one or more embodiments, the support tab 212 is connected to the first terminal tab 211 with a step S, and may extend horizontally from one side of the first terminal tab 211. The support tab 212 and the first terminal tab 211 may have a step S corresponding to the height of the first electrode terminal 130 protruding from the first side of the battery cell 100. The step S may be proportional to the height of the first electrode terminal 130 protruding from the first side. The step S may increase or decrease in proportion to the height of the first electrode terminal 130 protruding from the first side. For example, the higher the height of the first electrode terminal 130 (e.g., the higher the first electrode terminal 130 protrudes from the first side of the battery cell 100), the greater the step S between the support tab 212 and the first terminal tab 211.

According to one or more embodiments, the first module tab 213 may be bent and may extend from one side of the support tab 212. The first module tab 213 may be electrically connected to the protective circuit module 400.

According to one or more embodiments, a first bent portion 214 arranged between the support tab 212 and the first module tab 213 may be bent. The first bent portion 214 may be bent so that the support tab 212 and the first module tab 213 may come into contact. As shown in FIG. 7(b), the support tab 212 and the first module tab 213 may be in direct contact with each other in the structure in which the first connecting portion 210 is folded. In other words, surfaces of the support tab 212 and the first module tab 213 may be directly in contact with (flush with) each other when the first bent portion 214 is bent.

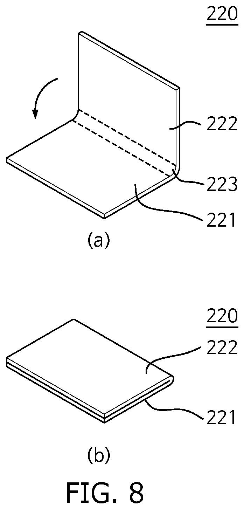

FIG. 8 is a perspective view illustrating a second connecting portion 220, according to one or more embodiments of the present disclosure.

Referring to FIG. 8, FIG. 8(a) illustrates a structure before the second connecting portion 220 is folded, and FIG. 8(b) illustrates a structure after the second connecting portion 220 is folded.

According to one or more embodiments, the second connecting portion 220 may connect the second electrode terminal 140 (see, e.g., FIG. 2) and the protective circuit module 400 (see, e.g., FIG. 2) on the first side surface of the battery cell 100. The second connecting portion 220 may include a material having good or suitable electrical conductivity. For example, the second connecting portion 220 may include a metal having good or suitable electrical conductivity, such as gold, silver, copper, and/or nickel, but the present disclosure is not limited thereto.

According to one or more embodiments, the second connecting portion 220 may include a second terminal tab 221 and a second module tab 222.

According to one or more embodiments, the second terminal tab 221 may be electrically connected to the second electrode terminal 140. The second terminal tab 221 may be connected to the second electrode terminal 140 by welding.

According to one or more embodiments, the second module tab 222 may be electrically connected to the protective circuit module 400. The second module tab 222 may be bent and may extend from the second terminal tab 221.

According to one or more embodiments, a second bent portion 223 arranged between the second terminal tab 221 and the second module tab 222 may be bent. The second bent portion 223 may be bent so that the second terminal tab 221 and the second module tab 222 may come into contact. As shown in FIG. 8B, the second terminal tab 221 and the second module tab 222 may be in direct contact with each other in the structure in which the second connecting portion 220 is folded. In other words, surfaces of the second terminal tab 221 and the second module tab 222 may be directly in contact with (flush with) each other when the second bent portion 223 is bent.

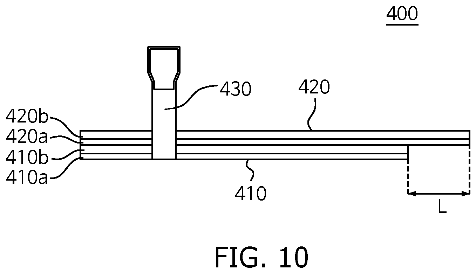

FIG. 9 is a perspective view of a protective circuit module, according to one or more embodiments of the present disclosure. FIG. 10 is a side view illustrating one side of a protective circuit module, according to one or more embodiments of the present disclosure.

Referring to FIG. 9 and FIG. 10, the protective circuit module 400 according to one or more embodiments of the present disclosure may be electrically connected to the battery cell 100 to prevent or reduce overheating and explosion caused by overcharge, over-discharge, or overcurrent of the battery cell 100. The protective circuit module 400 may include safety elements made of passive elements such as resistors and capacitors or active elements such as field-effect transistors, or protective circuit elements in which integrated circuits may be selectively formed.

According to one or more embodiments, the protective circuit module 400 may include a first substrate module 410 and a second substrate module 420.

According to one or more embodiment, as illustrated, for example, in FIG. 3, the first substrate module 410 may be electrically connected to the first electrode terminal 130 and the second electrode terminal 140 on a lower surface of the protective circuit module 400. The second substrate module 420 may be connected to an upper surface of the first substrate module 410. The second substrate module 420 may be formed to be longer than the first substrate module 410. For example, the second substrate module 420 may be arranged on the first substrate module 410, and may be formed to be longer by a length L at one side relative to the first substrate module 410. The second substrate module 420 may be formed to be longer than the first substrate module 410 so that more protective circuit elements and/or the like may be arranged on the second substrate module 420.

According to one or more embodiments, as illustrated in FIG. 5, the first substrate module 410 may be spaced and/or apart (e.g., spaced apart or separated) from the first electrode terminal 130 in a horizontal direction (e.g., the X-axis direction). The second substrate module 420 may be spaced and/or apart (e.g., spaced apart or separated) from the first electrode terminal 130 in a vertical direction (e.g., the Z-axis direction). For example, the first substrate module 410 may be arranged with a horizontal spacing gap G2 from the first electrode terminal 130. The second substrate module 420 may be arranged with a vertical spacing gap G1 from the first electrode terminal 130.

According to one or more embodiments, the first substrate module 410 may include a first substrate 410a, a lead portion 430, and a connector 440 (see, e.g., FIG 9). Protective circuit elements may be included on (e.g., integrated into) the first substrate 410a. The first substrate 410a may be a flexible printed circuit board, but the present disclosure is not limited thereto.

According to one or more embodiments, the first substrate 410a may be connected to the first connecting portion 210 and the second connecting portion 220 to be electrically connected to the first electrode terminal 130 and the second electrode terminal 140. The first substrate 410a may be connected to the first electrode terminal 130 and the second electrode terminal 140 to transmit an electrical signal capable of measuring a voltage of the battery cell 100 and of measuring a current flowing through the cell to the protective circuit element on the first substrate 410a (e.g., the protective circuit element may be included on or integrated into the first substrate 410a).

According to one or more embodiments, the lead portion 430 may be drawn from one side of the first substrate 410a. A connector 440 connected to an external device may be arranged on one side of the lead portion 430.

According to one or more embodiments, the connector 440 may be connected to an external device. The protective circuit module 400 may be connected to an external device through the connector 440. The protective circuit module 400 may be to transmit electrical energy stored in the battery cell 100 to an external device through the connector 440 or receive a control signal for controlling the operation of the battery cell 100 from the external device.

According to one or more embodiments, the first substrate module 410 may include a first substrate cap 410b arranged on the first substrate 410a while covering the protective circuit element included on (e.g., integrated into) the first substrate 410a. The first substrate cap 410b may be formed by molding while covering the protective circuit material with a resin material on the first substrate 410a.

According to one or more embodiments, the second substrate module 420 may include a second substrate 420a and a second substrate cap 420b. Protective circuit elements may be included on (e.g., integrated into) the second substrate 420a. The second substrate 420a may be a printed circuit board, but the present disclosure is not limited thereto. The second substrate 420a may be connected to the first substrate 410a by wiring. The second substrate 420a may be to transmit or receive an electrical signal to or from the first substrate 410a. The second substrate cap 420b may be arranged on the second substrate 420a while covering protective circuit elements included on (e.g., integrated into) the second substrate 420a. The second substrate cap 420b may be formed by molding while covering the protective circuit material with a resin material on the second substrate 420a.

According to one or more embodiments, the second substrate 420a is formed to be longer than the first substrate 410a, so that more protective circuit elements may be included on (e.g., integrated into) the second substrate 420a than on (into) the first substrate 410a.

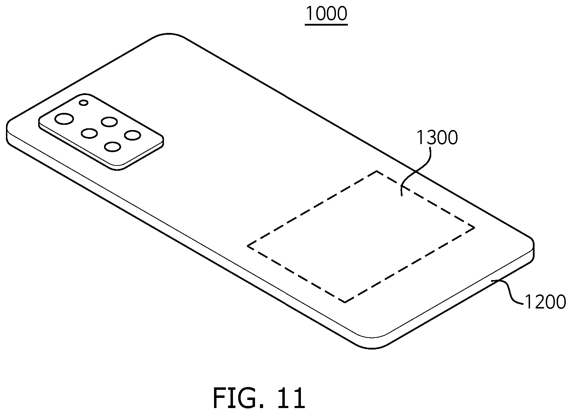

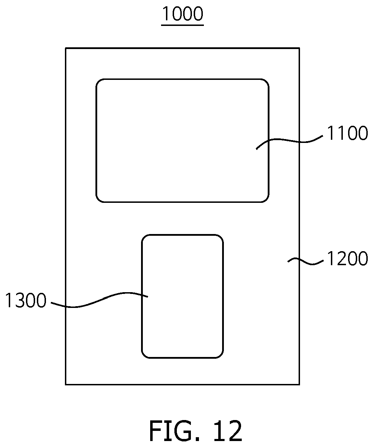

FIG. 11 is a perspective view illustrating a battery driving device, according to one or more embodiments of the present disclosure. FIG. 12 is a plan view illustrating a battery assembly arranged in a battery driving device, according to one or more embodiments of the present disclosure.

Referring to FIG. 11 and FIG. 12, a battery driving device 1000 according to one or more embodiments of the present disclosure may include an operating unit 1100 that performs a set operation, a housing 1200 that accommodates the operating unit 1100 therein, and a power unit 1300 that is fixed inside the housing 1200 and supplies power to the operating unit 1100.

The battery driving device 1000 including the power unit 1300 may be a smartphone, but the present disclosure is not limited thereto, and the power unit 1300 may be used in one or more suitable devices that use electric energy stored in the power unit 1300 as a power source and require high-performance and high-precision protective circuits.

The operating unit 1100 may include one or more suitable operating units that are supplied with power and driven by electrical energy. For example, it may include an application processor (AP) of a portable electronic device, a central process unit (CPU), and/or a motor control unit (MCU) of an electric mobile device.

As an example, a printed circuit board having signal transmission wiring may be arranged inside the housing 1200, and the operating unit 1100 may be mounted on the printed circuit board to be electrically connected to other components of the battery driving device 1000.

The housing 1200 may accommodate the operating unit 1100 and the power unit 1300 therein and provide an external appearance of the battery driving device 1000. The housing 1200 may be provided in one or more suitable structures as long as it may support the operation unit 1100 and the power unit 1300 therein and protect them from external impact.

The power unit 1300 may be fixed inside the housing 1200 to stably supply power to the operating unit 1100. For example, the power unit 1300 may be configured as a rechargeable secondary battery. The power unit 1300 may have substantially the same configuration as the battery assembly 10 described with reference to FIG. 1 to FIG. 10.

For example, the power unit 1300 may be arranged in a power area inside the housing 1200 and connected to a power terminal of the printed circuit board. Accordingly, the operating unit 1100 may be driven using the electrical energy stored in the battery assembly 10.

The power unit 1300 may include the battery cell 100 in which the electrode assembly 110 (see, e.g., FIG. 6) is accommodated inside the case 120 (see, e.g., FIG. 6) made of stainless steel, and having the protective circuit module 400 arranged outside the battery cell 100.

According to the battery assembly 10 described above, the battery assembly 10 may include the connecting portion 200 having a foldable structure connecting the first electrode terminal 130 and the second electrode terminal 140 arranged on the first side of the battery cell 100 to the protective circuit module 400. By the connecting portion 200 having the foldable structure, the protective circuit module 400 may be arranged on the first electrode terminal 130 and the second electrode terminal 140. The disposition area of the protective circuit module 400 on the first electrode terminal 130 and the second electrode terminal 140 may be expanded. Accordingly, the size of the protective circuit module 400 may be increased while maintaining the same size of the battery assembly 10. By increasing the size of the protective circuit module 400 to allow for the disposition of more protective circuit elements, the protective circuit module 400 with high operating precision and high functionality may be provided.

The protective circuit module 400 with high operating precision and high functionality may stabilize the operation of the battery cell 100, thereby increasing the operating stability of the battery driving device 1000 equipped with the battery assembly 10.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated.

Although the present disclosure has been described above with respect to embodiments thereof, the present disclosure is not limited thereto. Various modifications and variations can be made thereto by those skilled in the art within the scope of the present disclosure.

### Reference Numerals

10: battery assembly
100: battery cell
110: electrode assembly
120: case
130: first electrode terminal
140: second electrode terminal
150: electrolyte injection port
210: first connecting portion
220: second connecting portion
310: first insulating member
320: second insulating member
400: protective circuit module
410: first substrate module
410a: first substrate
410b: first substrate cap
420: second substrate module
420a: second substrate
420b: second substrate cap
430: lead portion
440: connector

## Claims

1. A battery assembly (10) comprising:
a battery cell (100) accommodating an electrode assembly (110) and comprising a first side comprising a first electrode terminal (130) and a second electrode terminal (140) thereon;
a protective circuit module (400) above the first electrode terminal (130) and the second electrode terminal (140); and
a connecting portion (200) connecting the first electrode terminal (130) and the second electrode terminal (140) to the protective circuit module (400),
wherein the connecting portion (200) has a foldable structure.

2. The battery assembly (10) as claimed in claim 1, wherein the protective circuit module (400) is parallel to the first side in a structure in which the connecting portion (200) is folded.

3. The battery assembly (10) as claimed in claim 2, wherein
the protective circuit module (400) is to be spaced apart from the first electrode terminal (130) in the structure in which the connecting portion (200) is folded.

4. The battery assembly (10) as claimed in any one of claims 1 to 3, wherein the connecting portion (200) comprises
a first connecting portion (210) on the first side, connecting the first electrode terminal (130) to the protective circuit module (400), and having a foldable structure; and
a second connecting portion (220) on the first side, connecting the second electrode terminal (140) to the protective circuit module (400), and having a foldable structure.

5. The battery assembly (10) as claimed in claim 4, wherein the first connecting portion (210) comprises
a first terminal tab (211) connected to the first electrode terminal (130);
a support tab (212) having a step with respect to the first terminal tab (211) and extending horizontally from one side of the first terminal tab (211); and
a first module tab (213) bent and extending from one side of the support tab (212) and connected to the protective circuit module (400).

6. The battery assembly (10) as claimed in claim 5, wherein in a structure in which the first connecting portion (210) is folded, the support tab (212) and the first module tab (213) are in direct contact with each other.

7. The battery assembly (10) as claimed in claim 5, wherein the step corresponds to a height of the first electrode terminal (130) protruding from the first side.

8. The battery assembly (10) as claimed in any one of claims 4 to 7, wherein the second connecting portion (220) comprises
a second terminal tab (221) connected to the second electrode terminal (140); and
a second module tab (222) connected to the protective circuit module (400).

9. The battery assembly (10) as claimed in claim 8, wherein in a structure in which the second connecting portion (220) is folded, the second terminal tab (221) and the second module tab (222) are in direct contact with each other.

10. The battery assembly (10) as claimed in any one of claims 1 to 9, wherein the protective circuit module (400) comprises
a first substrate module (410) having a lower surface connected to the first electrode terminal (130) and the second electrode terminal (140), and an upper surface opposite to the lower surface; and
a second substrate module (420) connected to the upper surface of the first substrate module (410), and
a length of the second substrate module (420) is longer than that of the first substrate module (410).

11. The battery assembly (10) as claimed in claimed in claim 10, wherein the first substrate module (410) is horizontal spaced from the first electrode terminal (130), and the second substrate module (420) is vertically spaced from the first electrode terminal (130).

12. The battery assembly (10) as claimed in any one of claims 10 to 11, wherein the first substrate module (410) comprises
a first substrate (410a) comprising a protective circuit element;
a lead portion (430) drawn from one side of the first substrate (410a); and
a connector (440) on one side of the lead portion (430) and connected to an external device.

13. The battery assembly (10) as claimed in any one of claims 10 to 12, wherein the second substrate module (420) comprises
a second substrate (420a) comprising a protective circuit element, and
a second substrate cap (420b) on the second substrate while covering the protective circuit element.

14. The battery assembly as claimed in any one of claims 1 to 13, further comprising an insulating portion (300) on the first side between the first electrode terminal (130) and the second electrode terminal (140);
wherein the insulating portion (300) preferably comprises
a first insulating member (310) on the first side, and between a first connecting portion (210) connected to the first electrode terminal (130) and the battery cell (100); and
a second insulating member (320) on the first insulating member (310) and between the battery cell (100) and the protective circuit module (400).

15. A battery driving device comprising:
an operating unit (1100) to operate in a case of being supplied with power;
a housing (1200) to accommodate the operating unit (1100) therein so that the operating unit (1100) is fixed; and
a power unit (1300) fixed inside the housing (1200) and to supply power to the operating unit (1100),
wherein the power unit (1300) comprises the battery assembly (10) as claimed in any one of claims 1 to 14.
